# EUROPEAN PATENT APPLICATION

(11) **EP 3 838 366 A1**
(43) Date of publication of application: **23.06.2021**
(21) Application number: 19217888.7
(22) Date of filing: 19.12.2019
(51) Int. Cl.: B01D 24/12, B01D 35/027, B01D 35/157, C02F 1/00

(54) **FILTRATION DEVICE**

(71) Applicant: Brita GmbH, 65232 Taunusstein (DE)
(72) Inventor: SOBEK, Nicoletta, 65232 Taunusstein (DE); Wolf, Jürgen, 65830 Kriftel (DE)

(57) **Abstract**

The present invention relates to a filtration device (1) with an inlet funnel (3) having an outlet (17, 63) and with a filter cartridge (5) having at least one protrusion (41, 71). In order to provide a better way of adjusting the flow rate of filtration devices, the filter cartridge (5) is placeable in the inlet funnel (3) in n orientations, such that in a first orientation a first protrusion (41, 71) of the at least one protrusion interacts with the outlet (17, 63) in such a way that it provides a first effective cross-section A and such that in a second orientation the first protrusion (41, 71) does not interact with or differently interacts with the outlet (17, 63) in such a way that it provides a second effective cross-section B, wherein C ≥ B > A.

## Description

The present invention relates to a water filtration device as well as a filter cartridge.

Filtration devices of the above-referenced kind are being used as water filters for everyday use in households, which is why they are also called table water filters. They are primarily used for clearing tap water of unwanted substances. Among these substances are chloride and hardness builders such as calcium and magnesia, but also lead, which finds its way into tap water through the use of lead pipes, especially in older houses.

Table water filters are gravity-operated. Besides the pouring of tap water into the water filter, no work is necessary for filtering the water. The water simply flows downwards through a filter cartridge and into a receptacle for the filtered water due to the gravitational force. The filter cartridge is accordingly also gravity-operated.

One filtration device known from EP 1 230 166 B1 comprises an inlet funnel having a bottom wall, which is provided with an opening for a filter cartridge. The filter cartridge is plugged into the opening, creating a seal between the opening and a sealing rim of the filter cartridge. In use, water is introduced into the inlet funnel from above and then flows into the filter cartridge through water inlets. Granular treatment media for the water is located inside of the filter cartridge. The treatment media usually comprises ion exchange resin and/or active coal, but other components may be used as treatment media as well. In the filter cartridge the water is treated and then exits the filter cartridge downwards through water outlets at the bottom of the filter cartridge. The filter cartridge is also provided with air outlets at its very top in order to allow air from inside the filter cartridge to exit the filter cartridge upwards at the beginning of the filtration process.

In the filtration device shown in EP 1 748 830 B9 the filter cartridge on one hand and the inlet funnel on the other are provided with corresponding fixing means for ensuring that a sealing rim of the filter cartridge comes into contact with an edge of the inlet funnel during insertion of the filter cartridge into the inlet funnel thereby making sure that a tight seal between the two is provided every time.

Many filter cartridges known in the state of the art generally provide only one "setting", meaning that the throughput of the filter cartridge is always more or less the same. One exception can be found in EP 0 498 913 A1, which discloses a filter cartridge having a shutoff device in a bottom area with which two flow rates of the filter cartridge can be set. The flow rate determines how long water is treated inside the filter cartridge so that the user may adjust the flow rate to the quality and in particular the hardness of the water that is to be filtered. Providing such shutoff devices on the filter cartridge is generally undesirable since it increases the manufacturing cost of the filter cartridges.

It is the object of the invention to provide a better way of adjusting the flow rate of filtration devices.

This object is solved by a filtration device according to claim 1.

The filtration device comprises an inlet funnel and a filter cartridge. The inlet funnel has a sealing seat, which is symmetrical about a central axis X1 of the inlet funnel, and a chamber below the sealing seat, the chamber comprising an outer wall and a bottom wall. The bottom wall has an outlet with a nominal cross section C. The nominal cross-section is the cross-section of the outlet limiting the flow of water out of the inlet funnel through the outlet in case no filter cartridge is inserted into the funnel.

The filter cartridge comprises a housing having a top side and a bottom side as well as a sealing rim located between the top side and the bottom side, the sealing rim being symmetrical about a central axis X2 of the filter cartridge. In use, the central axes of the inlet funnel and of the filter cartridge are identical, disregarding production inaccuracies, which is why they are commonly referred to as central axis X in the following. The filter cartridge has at least one protrusion arranged on the bottom side.

The sealing rim being located between the top side and the bottom side does not necessarily mean that one side has to be located higher and the other side lower than the sealing rim with reference to the central axis X or the gravitational direction. Instead, the sealing rim is also located between the top side and the bottom side when a person running a finger from the top side to the bottom side along the housing comes across the sealing rim. The sealing rim is thus particularly located between the top side and the bottom side along an outer surface of the housing.

The filter cartridge is placeable in the inlet funnel in n orientations, such that in a first orientation a first protrusion of the at least one protrusion interacts with the outlet in such a way that it provides a first effective cross-section A and such that in a second orientation the first protrusion does not interact with or differently interacts with the outlet in such a way that it provides a second effective cross-section B, wherein C ≥ B > A.

It should be pointed out that it is not necessary but possible that the first protrusion interacts with the outlet in each of the orientations. In this case, the first (and single) protrusion may be arranged in the outlet in the first orientation and in the second orientation as well but it may be arranged in a different way such that different effective cross-sections A and B are provided.

According to another embodiment, in the second orientation, the effective cross-section may be provided by no protrusion being arranged in the outlet or by a second protrusion being arranged in the outlet, the second protrusion being different from the first protrusion. In this second orientation, in any case, the first protrusion is arranged somewhere outside of the outlet, thus providing the second effective cross-section B = C or B ≤ C.

It should also be clear from this that the term "first protrusion" as used herein does not necessarily require the existence of a second protrusion. When hereinafter embodiments are discussed having no other but a first protrusion the terms "the single protrusion" or simply "the protrusion" may be used instead of "the first protrusion".

By providing a filter cartridge that can be inserted into the inlet funnel in more than one orientations, each orientation resulting in a different flow rate, the flow rate may be chosen by the user in an easy way. Instead of having to manipulate some form of switch on the filter cartridge, the user can simply chose one of the orientations and insert the filter cartridge into the inlet funnel accordingly. In particular, the user may place the filter cartridge in the first orientation when dealing with water of high hardness and in the second orientation when dealing with water of low hardness or simply according to his or her personal desire.

The terms "position" and "orientation" are used as follows: in general, an object may be moved from one position to another by translation whereas an object may be moved from one orientation to another by rotation. In the context of filter cartridges, a change in orientation is particularly achieved by rotating the filter cartridge around its central axis X. Of course, when the filter cartridge is already placed in an inlet funnel, a change in orientation can only be accomplished by both a translational and a rotational movement, because the filter cartridge cannot be directly rotated in the inlet funnel. The filter cartridge can however be moved from one orientation to another by lifting it via a translational movement followed by a rotational movement - the rotational movement actually changing the orientation of the filter cartridge - and another translational movement inverse to the first translational movement. Even though translational movement is involved, the filter cartridge will effectively only be changed in terms of its orientation. It should however be noted that the final position of the filter cartridge in the inlet funnel in the two orientations may vary slightly in such a case.

The number of orientations, in which the filter cartridge may be placed in the inlet funnel, is greater than one (n ≥ 2). Too many possible orientations are impractical as it could take the user too much time to figure out which one to use. It is therefore preferred to have less than ten possible orientations (n < 10), in particular n = {2, 3, 4}. Four orientations are still easily distinguishable for the user. The most preferred option is to have only two orientations (n = 2), which provides a binary option to the user from which he or she can chose most rapidly. And also in terms of complexity it is preferred that n = 2 so that the manufacturing cost of the filter cartridge is limited.

The filter cartridge and thus the filtration device is gravity-operated. In use, water is filled into an upper volume of the inlet funnel located above the filter cartridge. The filter cartridge preferably has one inlet opening located in the top side and at least one outlet opening located in a bottom area. The water enters the filter cartridge through the at least one inlet opening. Inside the filter cartridge the water is treated by filter media located therein. Said filter media may comprise ion exchange resin and/or active coal for example. After being treated the water exits the filter cartridge through the at least one outlet opening. When exiting the filter cartridge the water flows into a buffer volume defined by the bottom of the filter cartridge as well as the bottom wall and the outer wall of the inlet funnel. The treated water then exits the buffer volume through the effective cross-section of the outlet into an area below the inlet funnel. The effective cross-section is determined by the orientation of the filter cartridge as described above. The effective cross-section of the outlet is preferably the smallest cross-section along the described path of the water flow in any orientation of the filter cartridge, the outlet together with the at least one protrusion thus limiting the flow of water in any such orientation.

The filter cartridge preferably comprises a housing and a coal disc located therein. The coal disc comprises active coal and is able to filter out certain unwanted substances from the water. The housing is preferably shaped like an upside-down cup having a circumferential housing wall closed at the top by a roof and being open at the bottom. The coal disc is porous and preferably located at said bottom so that it constitutes the outlet opening for water flowing from inside the filter cartridge to an area below the filter cartridge. In an inner volume defined by the housing and the coal disc additional filter media such as ion exchange resin may be arranged. The housing preferably has a flange at the bottom that provides a bottom side of the filter cartridge on which the at least one protrusion may be arranged. The flange is preferably located radially outwards of the water outlet of the filter cartridge with respect to the central axis X of the filter cartridge.

The filter cartridge and/or the inlet funnel are preferably formed by injection molding or thermoforming.

The filtration device preferably further comprises a container in which the inlet funnel may be arranged. Water flowing through the outlet of the inlet funnel can be collected in the container, from which it may be poured e.g. into a glass. The container may further comprise a lid closing the container at the top.

The sealing seat of the inlet funnel and the sealing rim of the filter cartridge are complementary. When the filter cartridge is placed in the inlet funnel, the seat and the sealing rim interact such that a sealing is provided. This sealing prohibits water from flowing around the interior of the filter cartridge so that all water inserted into the inlet funnel is treated.

The sealing seat of the inlet funnel and the sealing rim of the filter cartridge are preferably n-fold rotationally symmetrical. This enables the filter cartridge to be placed easily in n orientations in the inlet funnel.

The outlet has a nominal cross-section that encompasses the cross-section of each protrusion, one at a time, as well as an additional flow area so that water may flow through the outlet even if the at least one protrusion is arranged in the outlet. The at least one protrusion is preferably of a cylinder shape, in particular of a hollow cylinder shape. Cylinder shapes can easily be demolded during injection-molding processes, which is the preferred manufacturing process of filter cartridges. Especially in such cases the outlet preferably has a circular cross-section with an added notch as shown in EP 1 748 830 B9 for example.

In preferred embodiments the filter cartridge comprises n or n-1 protrusions and preferably more than one protrusion, in particular a first and a second protrusion as described above. If there is more than one, the protrusions have different cross-sections and are assigned to the outlet via the n orientations of the filter cartridge. Each protrusion thus leads to a different effective cross-section with the outlet thereby enabling the user to choose between several water flow settings. It should be pointed out that even if more than one protrusion is arranged on the bottom side of the filter cartridge, it is preferred that in each orientation of the filter cartridge a maximum of one protrusion is arranged in the outlet. If there are n-1 protrusions, no protrusion is arranged in the outlet in one orientation of the filter cartridge so that the corresponding effective cross-section is equal to the nominal cross-section of the outlet (C = B). If there is more than one protrusion present, e.g. a first and a second protrusion, then the protrusions may particularly all be cylinder shaped having different cross-sections.

If there are two protrusions or more, each protrusion provides a different effective cross-section when it is arranged in the outlet, the effective cross-sections all being smaller than C.
Various preferred embodiments make use of primary and secondary matching areas that are selectively matched when the filter cartridge is inserted in the inlet funnel in its various orientations.

In such embodiments the outlet is arranged in at least one primary matching area of the bottom wall located horizontally off-center. The filter cartridge has n ≥ 2 secondary matching areas located n-fold symmetrically and horizontally off-center on the bottom side. The at least one protrusion is arranged in at least one of the secondary matching areas on the bottom side. The filter cartridge is placeable in the inlet funnel in n orientations, such that in each of the n orientations one of the secondary matching areas is assigned to the primary matching area. In a first of the n orientations one of the secondary matching areas having the first protrusion is assigned to the primary matching area such that the first protrusion is arranged in the outlet, thereby reducing the cross-section of the outlet to the effective cross-section A. In a second orientation, a secondary matching area having no protrusion or a different protrusion, e.g. the second protrusion, may be assigned to the same primary matching area, which results in a different effective cross-section B.

The n secondary matching areas are preferably arranged uniformly along a circular path having the central axis at its center. "Uniformly" particularly means that in between every two neighboring secondary matching areas a respective arc of the circular path is defined, each arc forming a central angle α = 360°/n.

Preferably, only one protrusion at most is arranged in each secondary matching area. This basically means that particularly preferred embodiments have one of two settings: in the first setting, exactly one protrusion is located in each of the secondary matching areas. In the second setting, one secondary matching area is free of protrusions while in every other secondary matching area exactly one protrusion is arranged. The second setting reduces the number of protrusions by one thus limiting the complexity of the filter cartridge.

In some preferred embodiments, the bottom wall has one single outlet arranged in a central position and the filter cartridge has one single protrusion arranged in a central position, wherein the protrusion is arranged at least partially in the outlet in the first orientation of the filter cartridge in such a way that the nominal cross-section is reduced to the effective cross-section A and the protrusion is arranged at least partially in the outlet in the second orientation of the filter cartridge in such a way that the nominal cross-section is reduced to the effective cross-section B with C > B > A. In these embodiments, the single protrusion interacts directly with the single outlet in both orientations.

Embodiments with only one single outlet and one single protrusion have a limited complexity which is advantageous regarding the manufacturing of the inlet funnel and the filter cartridge. Another advantage is that filtration devices having one single outlet and one single protrusion in central positions such as the Maxtra+®-series by BRITA® are already very successful in the market. Of course, these devices do not feature a difference in water flow based on the orientation of the filter cartridge in the inlet funnel. Implementing the invention in devices already present in the market is cost-effective, in particular by only changing the configuration of the filter cartridge, so that the user does not have to replace the inlet funnel but only the filter cartridge, which is replaced periodically anyway.

The outlet of the inlet funnel in such embodiments preferably has a circle with an added notch as nominal cross-section as for example shown in EP 1 748 830 B9. The outlet preferably has an outlet rim and/or an upper end for interacting with the single protrusion.

The single protrusion is preferably provided with a vertical groove on a circumferential surface of its cylinder shape as well as a stop member also arranged on the circumferential surface but opposite to the vertical groove. The vertical groove preferably runs along the complete height of the single protrusion. The stop member preferably has the shape of a tongue that is partially complementary to the notch. In particular, the stop member partially has a cross-section complementary to the cross-section of the notch in a plane perpendicular to the central axis. At a lower end of the stop member a first stop is formed, said first stop being complementary to the shape of the outlet rim so that the first stop may come to rest on top of the outlet rim. Above the first stop a second stop is formed, which may come to rest on an upper end of the projection of the inlet funnel. Both stops hinder the movement of the filter cartridge downward such that in each of the two orientations of the filter cartridge a defined end position is reached.

In the first orientation the stop member is arranged in the notch of the outlet when the filter cartridge is placed in the inlet funnel, thus prohibiting water from flowing through said notch. However, water can still flow through the outlet via the groove of the single protrusion. This results in an effective cross-section A smaller than the nominal cross-section C of the outlet (A < C). In the second orientation, for which the filter cartridge is rotated by 180° before being placed in the inlet funnel, the first stop rests on the outlet rim thus stopping the filter cartridge from entering further into the inlet funnel. In said orientation the groove together with the notch of the outlet provides an effective cross-section B, which is larger than the effective cross-section A but smaller than the nominal cross-section C (A < B < C).

The cross-section of the vertical groove is preferably similar or identical to the cross-section of the notch. This way, the water flow in the first orientation is the same as the one provided with state of the art filter cartridges having a simple cylindrical protrusion interacting with the circular outlet with the added notch. In the second orientation the effective cross-section is then doubled providing a larger water flow. The second orientation can thus be implemented by the user when dealing with water of a small hardness for example.

The problem of the invention is particularly solved by a filtration device comprising an inlet funnel and a filter cartridge, the inlet funnel having a sealing seat, which is symmetrical about a central axis of the inlet funnel, and a chamber below the sealing seat, the chamber comprising an outer wall and a bottom wall, the bottom wall having an outlet with a nominal cross section C, the filter cartridge comprising a housing having a top side and a bottom side as well as a sealing rim located between the top side and the bottom side, the sealing rim being symmetrical about a central axis of the filter cartridge, the filter cartridge having at least one protrusion arranged on the bottom side, wherein the outlet is arranged in at least one primary matching area of the bottom wall located horizontally off-center, wherein the filter cartridge has n ≥ 2 secondary matching areas located n-fold symmetrically and horizontally off-center on the bottom side, wherein the at least one protrusion is arranged in at least one of the secondary matching areas on the bottom side, wherein the filter cartridge is placeable in the inlet funnel in n orientations, such that in each of the n orientations one of the secondary matching areas is assigned to the primary matching area, and wherein in a first of the n orientations one of the secondary matching areas having a first protrusion is assigned to the primary matching area such that the first protrusion is arranged in the outlet, thereby reducing the cross-section of the outlet to the effective cross-section A.

Advantageous feature described above may be implemented in this embodiment as well.

The problem of the invention is also particularly solved by a filtration device comprising an inlet funnel and a filter cartridge, the inlet funnel having a sealing seat, which is symmetrical about a central axis of the inlet funnel, and a chamber below the sealing seat, the chamber comprising an outer wall and a bottom wall, the bottom wall having one single outlet with a nominal cross section C arranged in a central position, the filter cartridge comprising a housing having a top side and a bottom side as well as a sealing rim located between the top side and the bottom side, the sealing rim being symmetrical about a central axis of the filter cartridge, the filter cartridge having one single protrusion arranged in a central position on the bottom side, wherein the filter cartridge is placeable in the inlet funnel in n orientations, such that the single protrusion is arranged at least partially in the outlet in the first orientation of the filter cartridge in such a way that the nominal cross-section is reduced to the effective cross-section A and the single protrusion is arranged at least partially in the outlet in the second orientation of the filter cartridge in such a way that the nominal cross-section is reduced to the effective cross-section C > B > A.

Advantageous features described above may be implemented in this embodiment as well.

The problem of the invention is also solved by a filter cartridge comprising a housing having a top side and a bottom side as well as a sealing rim located between the top side and the bottom side, the sealing rim being symmetrical about a central axis of the filter cartridge. The filter cartridge has at least one protrusion arranged on the bottom side and is placeable in an inlet funnel having an outlet of a filtration device in n orientations, such that in a first orientation a first protrusion of the at least one protrusion interacts with the outlet in such a way that it provides a first effective cross-section A and such that in a second orientation the first protrusion does not interact with or differently interacts with the outlet in such a way that it provides a second effective cross-section B, wherein C ≥ B > A.

The problem of the invention is also solved by a filter cartridge comprising a housing having a top side and a bottom side as well as a sealing rim located between the top side and the bottom side, the sealing rim being symmetrical about a central axis of the filter cartridge, the filter cartridge having at least one protrusion arranged on the bottom side, wherein the filter cartridge has n ≥ 2 secondary matching areas located n-fold symmetrically and horizontally off-center on the bottom side, wherein the at least one protrusion is arranged in at least one of the secondary matching areas on the bottom side. The filter cartridge is preferably placeable in an inlet funnel of a filtration device in n orientations, such that in each of the n orientations one of the secondary matching areas is assigned to a primary matching area of the inlet funnel, and wherein in a first of the n orientations the secondary matching area having a first protrusion is assigned to the primary matching area such that the first protrusion is arranged in the outlet, thereby reducing the cross-section of the outlet to the effective cross-section A.

The problem of the invention is also solved by a filter cartridge comprising a housing having a top side and a bottom side as well as a sealing rim located between the top side and the bottom side, the sealing rim being symmetrical about a central axis of the filter cartridge, the filter cartridge having one single protrusion arranged in a central position on the bottom side, wherein the filter cartridge is placeable in an inlet funnel of a filtration device having an outlet with a nominal cross section C arranged in a central position in n orientations, such that the single protrusion is arranged at least partially in the outlet in the first orientation of the filter cartridge in such a way that the nominal cross-section C is reduced to the effective cross-section A and the single protrusion is arranged at least partially in the outlet in the second orientation of the filter cartridge in such a way that the nominal cross-section C is reduced to the effective cross-section C > B > A.

Advantageous feature described above may be implemented in these filter cartridges as well.

The invention will be described in detail with reference to the examples shown in the drawings, in which the following is shown:
- Figure 1a: a sectional side view of a first embodiment of a filtration device in a first setting;
- Figure 1b: a sectional side view of the filtration device according to figure 1a in a second setting;
- Figure 2: a bottom view of the filter cartridge of the filtration device according to figure 1a;
- Figure 3: partially the sectional view A-A of figure 1a;
- Figure 4a: partially a second embodiment of the invention in a first setting in a perspective view;
- Figure 4b: partially a sectional side view of the second embodiment in the first setting;
- Figure 4c: the sectional top view C-C of figure 4b;
- Figure 5a: partially a sectional side view of the illustrated second embodiment in a second setting;
- Figure 5b: the sectional top view D-D of figure 5a.

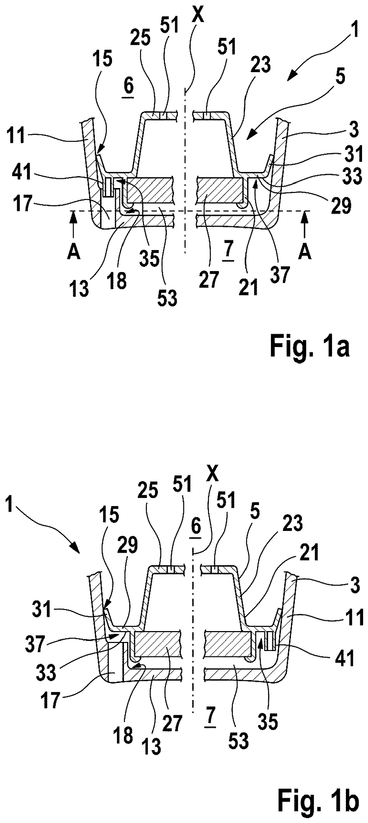

In figures 1a and 1b a filtration device 1 comprising an inlet funnel 3 and a filter cartridge 5 is shown. The filter cartridge 5 is placed in the inlet funnel 3 such that water inserted into an upper volume 6 of the inlet funnel 3 from above is filtered by the filter cartridge 5 before exiting the inlet funnel 3 to an area 7 below the inlet funnel 5. The filtration device 1 is gravity-operated.

The inlet funnel 3 is generally of an upside-down frustoconical shape and comprises a circumferential outer wall 11 and a bottom wall 13. The inlet funnel 3 has a sealing seat 15 formed by the outer wall 11. The sealing seat 15 as well as the outer wall 11 are 2-fold rotationally symmetrical around a vertical central axis X. In use, water that is to be filtered is poured into the inlet funnel 3 from above.

One single outlet 17 is provided in a primary matching area 18 of the bottom wall 13 horizontally off-center with regard to the central axis X. Water may generally exit the interior of the inlet funnel 3 via the outlet 17 flowing into the area 7 below the inlet funnel 5, even when there is no filter cartridge 5 present in the inlet funnel 3. The filtration device 1 further comprises a container (not shown), into which the inlet funnel 3 is inserted, for capturing the water exiting the inlet funnel 3 through the outlet 17. The outlet 17 has a nominal cross-section, which is uniform over the complete vertical extension of the outlet 17.

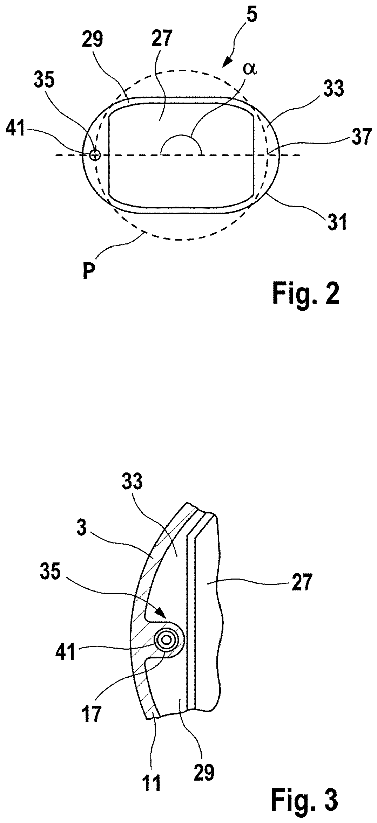

The filter cartridge 5, which is also illustrated in figure 2, comprises a housing 21, which has the shape of an upside-down cup. The housing 21 comprises a circumferential housing wall 23 closed at the top by a roof 25 and is open at the bottom. At said bottom, a coal disc 27 is arranged in the housing 21. The housing 21 further comprises a flange 29 located radially outwards of the housing wall 23 and extending along a closed path around the housing wall 23. The flange 29 comprises a sealing rim 31 which is complementary to the sealing seat 15. The sealing rim 31 is 2-fold rotationally symmetrical around the central axis X. The sealing seat 15 and the sealing 31 together form a sealing prohibiting water from flowing around the filter cartridge 5.

The flange 29 also provides a bottom side 33 of the filter cartridge 5. Two secondary matching areas 35, 37 are located on the bottom side 33. The secondary matching areas 35, 37 are arranged on a circular path P around the central axis X (see figure 2). Between the two secondary matching areas 35, 37 a central arc α = 180° of the circular path P is formed. The secondary matching areas 35, 37 are thereby arranged 2-fold symmetrically around the central axis X.

The filter cartridge 5 is placeable in the inlet funnel 3 in two orientations shown in figures 1a and 1b respectively thanks to the 2-fold rotational symmetry of the sealing seat 15 and the sealing rim 31. The secondary matching areas 35, 37 can thus be assigned to the primary matching area 18 of the inlet funnel 3 one at a time by placing the filter cartridge 5 in said orientations into the inlet funnel 3.

In one secondary matching area 35 a (single) protrusion 41 is located on the bottom side 33 of the filter cartridge 5. The protrusion 41 extends vertically and is generally shaped like a hollow cylinder or a pipe.

If the secondary matching area 37, in which no protrusion is located, is assigned to the primary matching area 18 (see figure 1b), the protrusion 41 is arranged such that it does not reduce the nominal cross-section of the outlet 17. In fact, the protrusion 41 does not interact with the outlet 17 at all. The cross-section of the outlet 17 is thus not reduced at all in this orientation. This way a first effective cross-section for the outflow of water into the area 7 is provided, the first effective cross-section being equal to the nominal cross-section of the outlet 17.

If the other secondary matching area 35 is assigned to the primary matching area 18 (see figure 1a), the protrusion 41 is partially arranged in the outlet 17 thus interacting with the outlet 17 by reducing the cross-section of the outlet 17 (see figure 3). This way a second effective cross-section for the outflow of water through the outlet 17 into the area 7 is provided, the second effective cross-section being smaller than the nominal cross-section of the outlet 17.

In use, water (not shown) is inserted into the inlet funnel 3 as mentioned above. The water enters the filter cartridge 5 through inlet openings 51 located in the roof 25. Inside the filter cartridge 5, ion exchange resin (not shown) is arranged for treating the water. Additionally, the water is treated by the active coal of the coal disc 27 when exiting the filter cartridge 5 through the coal disc 27 into a buffer volume 53 below the filter cartridge 5 and above the bottom wall 13. The coal disc 27 thus provides an outlet opening of the filter cartridge 5.

The water then fills the buffer volume 53 until the water level is so high that water starts flowing through the outlet 17 into the area 7 located below the bottom wall 13. The nominal cross-section of the outlet 17 is smaller than the total flow area of the coal disc 27, meaning that the outlet 17 limits the maximum flow of water even in the orientation shown in figure 1b.

In the setting shown in figure 1a the flow of water is limited further, because the protrusion 41 is arranged inside the outlet 17 thus reducing the nominal cross-section of the outlet 17 to the first effective cross-section.

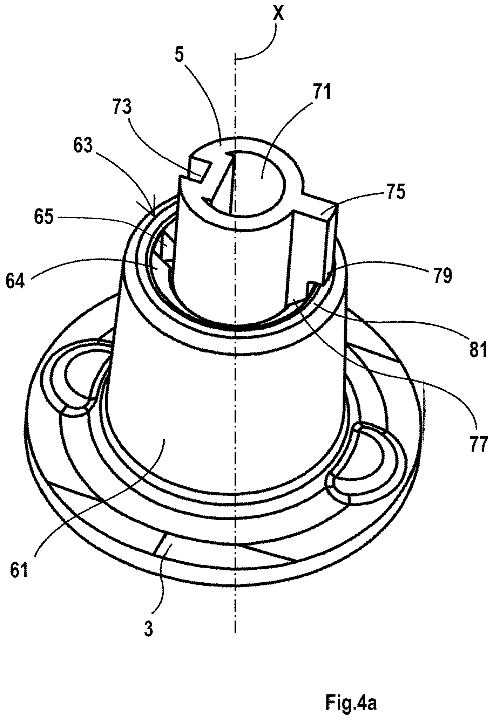

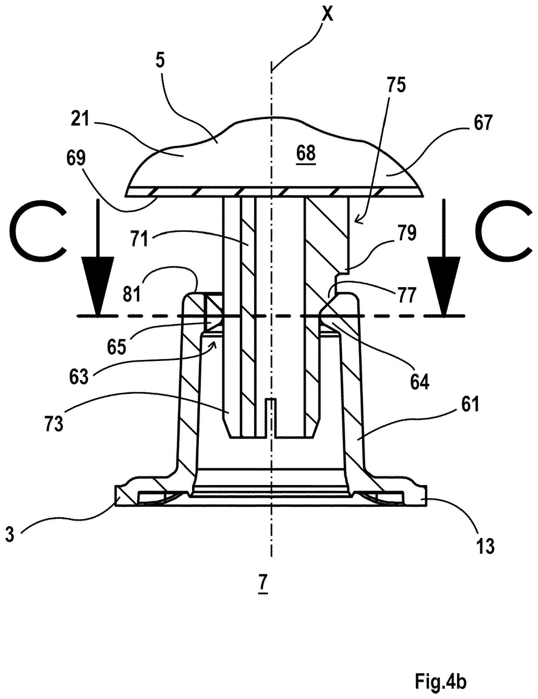

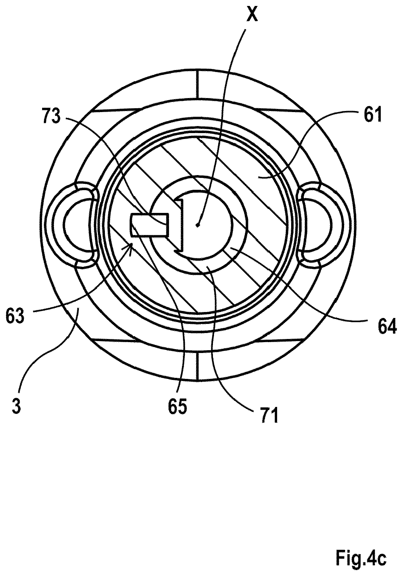

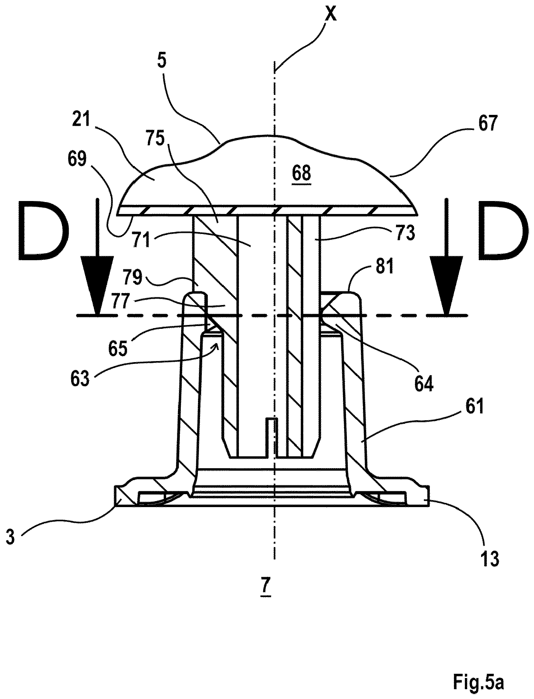

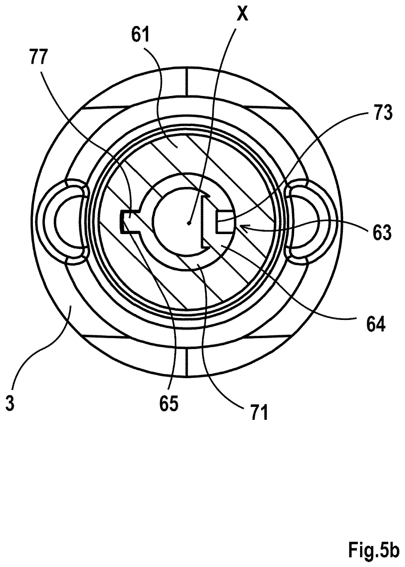

Another embodiment of the invention is shown in figures 4a, 4b, and 4c as well as 5a and 5b. The inlet funnel of this embodiment is generally of a similar shape as the one of EP 1 748 830 B9. This way, the inlet funnel 3 is generally of an upside-down frustoconical shape and comprises a circumferential outer wall (not shown here) as well as a bottom wall 13. The inlet funnel 3 has a sealing seat (not shown here) formed by the outer wall. Both the sealing seat and the outer wall are 2-fold rotationally symmetrical around a vertical central axis X. Water that is to be filtered can again be poured into the inlet funnel 3 from above.

The inlet funnel 3 has a single frustoconical projection 61 arranged in a central position of the bottom wall 13. The projection 61 is hollow along the central axis X so that it forms an outlet 63 of the inlet funnel 3 having an outlet rim 64. The smallest cross-section (nominal cross-section) of the outlet 63 has the shape of a circle with an added notch 65 (see figure 4a). Water can exit the interior of the inlet funnel via the outlet 63 to an area 7 below.

The filter cartridge 5 of this embodiment is of a similar design as the one of EP 1 748 830 B9. This way, the filter cartridge 5 comprises a housing 21 having a cup-shaped bottom part 67 as well as a head part (not shown) arranged on top of the bottom part 67. Inside the interior 68, which is defined by the head part and the bottom part 67, granular filter media comprising active coal as well as ion exchange resin is arranged. The head part comprises a top side with water inlets (not shown) and the bottom part 67 comprises a bottom side 69 with water outlets (not shown). The housing 21 also comprises a sealing rim (not shown) between the top side and the bottom side 69, which is complementary to the sealing seat of the inlet funnel. The sealing rim is 2-fold rotationally symmetrical around the central axis X. The sealing seat and the sealing rim together form a sealing for prohibiting water from flowing around the filter cartridge 5.

Due to the 2-fold symmetry of the sealing seat and the sealing rim, the filter cartridge 5 can be placed in the inlet funnel 3 in two orientations. One of these orientations is illustrated in figures 4a, 4b, and 4c while the other orientation is illustrated in figures 5a and 5b.

The filter cartridge 5 comprises one single protrusion 71 arranged in a central location on the bottom side 69 (see figure 4b). The protrusion 71 is generally of a hollow cylindrical shape. A vertical groove 73 is formed with the protrusion 71, the groove 73 running along the entire height of the protrusion 71. The groove 73 has the same cross-section as the notch 65 by itself. Opposite to the groove 73 a stop member 75 is formed with the protrusion 71. The stop member 75 extends vertically, that is parallel to the central axis X. At the lower end of the stop member 75 a first stop 77 is formed. The first stop 77 is formed complementary to the notch 65 with regard to its cross-section perpendicular to the central axis X.

Figures 5a and 5b show the filter cartridge 5 placed in the inlet funnel 3 in a first orientation, in which the protrusion 71 is inserted into the outlet 63. The first stop 77 can enter into the notch 65 in said first orientation (see figure 5a). The downwards movement is halted by a second stop 79 formed with the stop member 75 above the first stop 77. The second stop 79 comes to rest on an upper end 81 of the projection 61. In this position the notch 65 is plugged by the first stop 77 and cannot serve as part of the effective cross-section of the outlet 63. Instead, water may flow via the groove 73 to the area 7 below the inlet funnel 3.

The nominal cross-section C of the outlet 63 is thus reduced to an effective cross-section A < C.

In the second orientation of the filter cartridge 5 the protrusion 71 is inserted into the outlet 63 as shown in figures 4a, 4b, and 4c. In comparison with the first orientation, the filter cartridge 5 is rotated 180° around the central axis X. The first stop 77 is of a shape complementary to the outlet rim 64 so that the first stop 77 may come to rest on top of the outlet rim 64 in a secure manner (see figure 4b), thus stabilizing the filter cartridge 5 in the inlet funnel 3. As a result the filter cartridge 5 can be pushed down into the inlet funnel 3 less than in the first orientation. The protrusion 71 reduces the nominal cross-section C of the outlet 63 to an effective cross-section B < C, which is essentially the sum of the cross-sections of notch 65 and groove 73.

In both orientations of the filter cartridge 5, the protrusion 71 interacts with the outlet 63 and thus limits the flow of water.

The effective cross-section A of the first orientation is smaller than the effective cross-section B of the second orientation (A < B) since in the first position only the groove 73 provides a way for water to flow downwards. The two orientations thus provide two different effective cross-sections resulting in two different flow rates of the filtrations device.

### List of references

- 1: filtration device
- 3: inlet funnel
- 5: filter cartridge
- 6: upper volume
- 7: area

- 11: outer wall
- 13: bottom wall
- 15: sealing seat
- 17: outlet
- 18: primary matching area

- 21: housing
- 23: housing wall
- 25: roof
- 27: coal disc
- 29: flange
- 31: sealing rim
- 33: bottom side
- 35: secondary matching area
- 37: secondary matching area

- 41: protrusion

- 51: inlet opening
- 53: buffer volume

- 61: projection
- 63: outlet
- 64: outlet rim
- 65: notch
- 67: bottom part
- 68: interior
- 69: bottom side
- 71: protrusion
- 73: groove
- 75: stop member
- 77: first stop
- 79: second stop
- 81: upper end

- P: circular path
- X: central axis

- α: central arc

## Claims

1. Filtration device (1) comprising an inlet funnel (3) and a filter cartridge (5), the inlet funnel (3) having a sealing seat (15), which is symmetrical about a central axis (X) of the inlet funnel (3), and a chamber below the sealing seat (15), the chamber comprising an outer wall (11) and a bottom wall (13),
the bottom wall (13) having an outlet (17, 63) with a nominal cross section C,
the filter cartridge (5) comprising a housing (21) having a top side and a bottom side (33, 69) as well as a sealing rim (31) located between the top side and the bottom side (33, 69), the sealing rim (31) being symmetrical about a central axis (X) of the filter cartridge (5),
the filter cartridge (5) having at least one protrusion (41, 71) arranged on the bottom side (33, 69),
wherein the filter cartridge (5) is placeable in the inlet funnel (3) in n orientations, such that in a first orientation a first protrusion (41, 71) of the at least one protrusion interacts with the outlet (17, 63) in such a way that it provides a first effective cross-section A and such that in a second orientation the first protrusion (41, 71) does not interact with or differently interacts with the outlet (17, 63) in such a way that it provides a second effective cross-section B, wherein C ≥ B > A.

2. Filtration device (1) according to claim 1,
**characterized in that** n ≥ 2, in particular n < 10.

3. Filtration device (1) according to claim 1 or 2,
**characterized in that** the filter cartridge (5) has one inlet opening (51) located in the top side and at least one outlet opening located in a bottom area.

4. Filtration device (1) according to any one of the previous claims,
**characterized in that** the filter cartridge (5) comprises a housing (21) and a coal disc (27) located therein.

5. Filtration device (1) according to any one of the previous claims,
**characterized in that** the sealing seat (15) of the inlet funnel (3) and the sealing rim (31) of the filter cartridge (5) are complementary.

6. Filtration device (1) according to any one of the previous claims,
**characterized in that** the sealing seat (15) of the inlet funnel (3) and the sealing rim (31) of the filter cartridge (5) are n-fold rotationally symmetrical.

7. Filtration device (1) according to any one of the previous claims,
**characterized in that** the outlet (17, 63) has a nominal cross-section, which encompasses the cross-section of the at least one protrusion (41, 71) and has an additional flow area.

8. Filtration device (1) according to any one of the previous claims,
**characterized in that** the at least one protrusion (41, 71) is of a cylinder shape, in particular of a hollow cylinder shape.

9. Filtration device (1) according to any one of the previous claims,
**characterized in that** the filter cartridge (5) comprises n or n-1 protrusions (41, 71) and preferably more than one protrusion (41, 71).

10. Filtration device (1) according to any one of the previous claims,
**characterized in that** the outlet (17) is arranged in at least one primary matching area (18) of the bottom wall (13) located horizontally off-center, wherein the filter cartridge (5) has n ≥ 2 secondary matching areas (35, 37) located n-fold symmetrically and horizontally off-center on the bottom side (33),
wherein the at least one protrusion (41) is arranged in at least one of the secondary matching areas (35, 37) on the bottom side (33), wherein the filter cartridge (5) is placeable in the inlet funnel (3) in n orientations, such that in each of the n orientations one of the secondary matching areas (35, 37) is assigned to the primary matching area (18), and
wherein in a first of the n orientations the secondary matching area (35) having the first protrusion (41) is assigned to the primary matching area (18) such that the first protrusion (41) is arranged in the outlet (17), thereby reducing the cross-section of the outlet (17) to the effective cross-section A.

11. Filtration device (1) according to claim 10,
**characterized in that** only one protrusion (41, 71) at most is arranged in each secondary matching area (35, 37).

12. Filtration device (1) according to any one of claims 1 to 9,
**characterized in that** the bottom wall (13) has one single outlet (63) arranged in a central position and **in that** the filter cartridge (5) has one single protrusion (71) arranged in a central position,
wherein the protrusion (71) is arranged at least partially in the outlet (63) in the first orientation of the filter cartridge (5) in such a way that the nominal cross-section C is reduced to the effective cross-section A and the protrusion (71) is arranged at least partially in the outlet (63) in the second orientation of the filter cartridge (5) in such a way that the nominal cross-section C is reduced to the effective cross-section C > B > A.

13. Filtration device (1) according to claim 12,
**characterized in that** n = 2.

14. Filtration device (1) according to claim 12 or 13,
**characterized in that** the protrusion (71) is provided with a vertical groove (73) on a circumferential surface of its cylinder shape as well as a stop member (75) also arranged on the circumferential surface but opposite to the vertical groove (73).

15. A filter cartridge (5) comprising a housing (21) having a top side and a bottom side (33) as well as a sealing rim (31) located between the top side and the bottom side (33), the sealing rim (31) being symmetrical about a central axis (X) of the filter cartridge (5), the filter cartridge (5) having at least one protrusion (41, 71) arranged on the bottom side (33) and being placeable in an inlet funnel (3) having an outlet (17, 63) of a filtration device (1) in n orientations, such that in a first orientation a first protrusion (41, 71) of the at least one protrusion interacts with the outlet (17, 63) in such a way that it provides a first effective cross-section A and such that in a second orientation the first protrusion (41, 71) does not interact with or differently interacts with the outlet (17, 63) in such a way that it provides a second effective cross-section B, wherein C ≥ B > A.
